# FASCICULE DE BREVET EUROPEEN

(11) **EP 3 244 112 B1**
(45) Date de publication et mention de la délivrance du brevet: **30.10.2019**
(21) Numéro de dépôt: 17169385.6
(22) Date de dépôt: 04.05.2017
(51) Int. Cl.: F16L 29/04, F16B 39/00, F16B 41/00

(54) **CONNECTEUR POUR TUYAUX DE RACCORDEMENT DE SYSTÈME DE CLIMATISATION ET APPAREIL DE CLIMATISATION ASSOCIÉ**
ANSCHLUSSSTÜCK FÜR VERBINDUNGSROHRE EINES KLIMAANLAGENSYSTEMS, UND ENTSPRECHENDES KLIMAANLAGENGERÄT
CONNECTOR FOR CONNECTING PIPES OF AN AIR-CONDITIONING SYSTEM AND ASSOCIATED AIR-CONDITIONING DEVICE

(30) Priorité: 12.05.2016 FR 1654238
(43) Date de publication de la demande: 15.11.2017
(73) Titulaire: Star Light, 06000 Nice (FR)
(72) Inventeur: MAZIGH, Patrice, 06200 Nice (FR)
(74) Mandataire: Decobert, Jean-Pascal

(56) Documents cités:
- EP-A2- 0 166 223
- FR-A1- 2 994 592
- GB-A- 557 572

## Description

### DOMAINE DE L'INVENTION

L'invention concerne un connecteur pour relier les tuyaux d'un système de climatisation, ces tuyaux pouvant relier diverses unités de climatisation dudit système.

L'invention trouvera son utilisation pour l'interconnexion hermétique sous pression lors du montage d'appareils de climatisation notamment pour des appareils de climatisation de type bi-blocs muraux.

### ETAT DE LA TECHNIQUE

Un tel système de climatisation comprend une unité intérieure et au moins une unité extérieure reliées entre elles par des tuyaux de raccordement.

Une méthode conventionnelle pour installer un climatiseur, de sorte à expulser l'air de l'unité intérieure et l'air dans les tuyaux de raccordement après l'installation, consiste à charger en gaz réfrigérant la partie principale de l'unité extérieure jusqu'à un volume en excès par rapport au volume spécifié requis pour l'utilisation de la fonction air conditionné du système. Cet excès de gaz réfrigérant permet de purger l'air présent dans le reste du circuit. On utilise à cet effet une valve deux voies au niveau de l'unité extérieure de sorte que, une fois l'installation terminée, la circulation du gaz réfrigérant expulse l'air dans l'atmosphère. Ce procédé traditionnel est particulièrement dommageable pour l'environnement puisqu'il induit un dégazage de gaz réfrigérant dans l'atmosphère particulièrement nuisible, notamment par la destruction de la couche d'ozone.

On a donc cherché à proposer des dispositifs évitant de telles fuites de gaz réfrigérant dans l'atmosphère. En ce sens, une fois la connexion entre les unités intérieure et extérieure faite de façon traditionnelle par une liaison en cuivre qui se raccorde à l'unité intérieure et à l'unité extérieure par un écrou à serrer sur un filetage, il faut une intervention d'un frigoriste pour limiter les risques de dégazage dans l'atmosphère et éviter le tirage au vide de l'installation. Cette étape nécessite non seulement l'intervention d'un professionnel qualifié mais aussi l'emploi d'un matériel adéquat et souvent coûteux pour le pompage. En outre, les risques de dégazage ne sont en tout état de cause pas totalement supprimés.

On connaît du document FR 2994592 A1 un connecteur permettant de solidariser de manière fiable deux parties de connecteurs, au moyen d'un mécanisme assurant l'ouverture du circuit de gaz uniquement lorsque la connexion a abouti.

Cependant, ce connecteur ne garantit pas l'inviolabilité de la connexion fluidique au cours du temps, et, particulièrement, ne prévient pas les mauvaises manipulations des utilisateurs après montage.

### RESUME DE L'INVENTION

La présente invention concerne un connecteur de tuyau de circuit de climatisation comprenant une première partie dotée d'un filetage et une deuxième partie dotée d'un taraudage, le filetage et le taraudage étant destinées à coopérer par vissage selon un premier sens de rotation de sorte que le connecteur opère un passage d'une position déconnectée à une position connectée, le connecteur comprenant un dispositif d'ouverture, formé pour partie dans la première partie et pour partie dans la deuxième partie, et configuré pour permettre une circulation fluidique entre la première partie et la deuxième partie lorsque le connecteur est dans la position connectée et pour interdire une circulation fluidique entre la première partie et la deuxième partie lorsque le connecteur est dans la position déconnectée. Avantageusement, ledit connecteur est tel que le taraudage est formé pour une partie dans un premier composant d'un élément de serrage de la deuxième partie et pour une autre partie dans un deuxième composant d'un élément de serrage de la deuxième partie, le premier composant comprenant un profil de serrage apte à coopérer avec un outil de serrage, le premier composant et le deuxième composant coopérant par une liaison filetée configurée pour être vissée selon le premier sens de rotation et dévissée selon un deuxième sens de rotation opposé au premier sens de rotation.

Ainsi, lors de la connexion des deux parties du connecteur, les premier et deuxième composants restent bien assemblés car le sens de rotation est celui de leur vissage. Par contre, lors d'une tentative de déconnexion des deux parties de connecteur, la rotation opérée correspond à celle du dévissage des deux composants si bien que l'opérateur ne pourra que dévisser le premier composant relativement au deuxième composant, et la liaison entre le filetage et le taraudage des parties du connecteur ne sera pas dévissée. Par conséquent, l'invention assure que le connecteur n'est pas démontable par un opérateur dans des conditions normales.

Grâce au dispositif de rétention, on supprime toute possibilité pour un utilisateur non averti de démontage de la liaison créée par le connecteur, si bien que le système est sécurisé.

L'invention concerne aussi un appareil de climatisation comportant une unité extérieure et au moins une unité intérieure, au moins l'une des unités extérieure et intérieure comprenant un circuit empli d'un fluide réfrigérant, les deux circuits étant reliés par au moins un connecteur.

Avantageusement, deux tuyaux de raccordement relient respectivement l'entrée du circuit extérieur de l'unité extérieure à la sortie du circuit intérieur de l'unité intérieure ou la sortie du circuit extérieur de l'unité extérieure à l'entrée du circuit intérieur de l'unité intérieure, un connecteur étant prévu à chaque extrémité de chaque tuyau.

Un procédé de montage est aussi présenté.

### BREVE INTRODUCTION DES FIGURES

D'autres buts et avantages de la présente invention apparaîtront au cours de la description qui suit d'un mode de réalisation préféré de l'invention, cependant non limitatif. Les dessins ci-joints sont ainsi donnés à titre d'exemples et ne sont pas limitatifs de l'invention. Ils représentent seulement un mode de réalisation de l'invention et permettront de la comprendre aisément.
La figure 1 est une vue de la première partie d'un connecteur connu actuellement.
La figure 3 est une vue en coupe BB de la première partie d'un connecteur selon la figure 1.

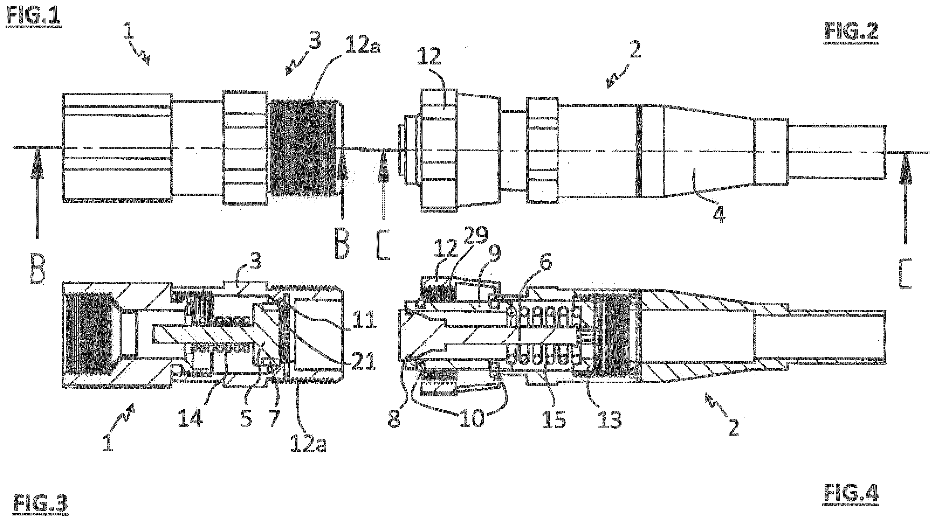

La figure 2 est une vue de la deuxième partie du connecteur connu actuellement.
La figure 4 est une vue en coupe CC de la deuxième partie du connecteur selon la figure 2.

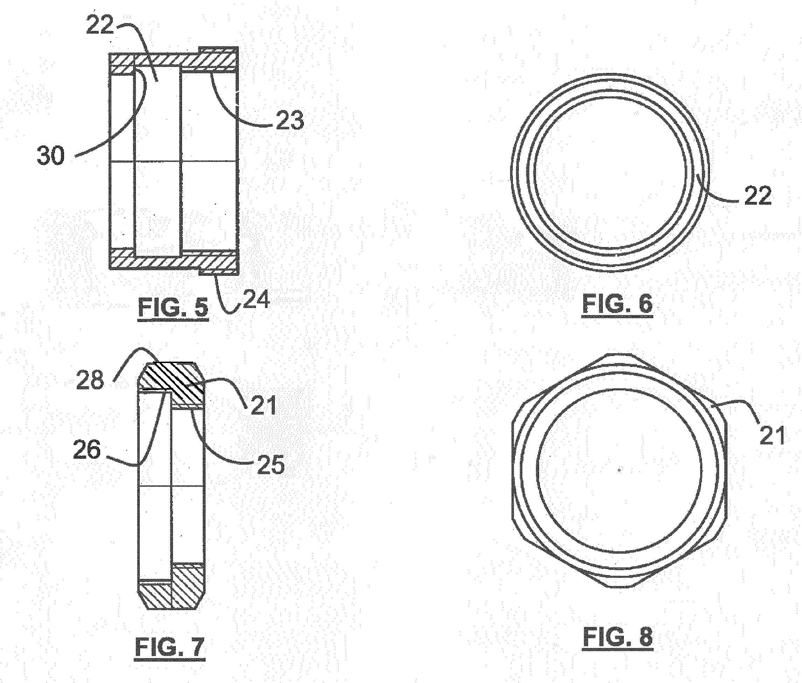

La figure 5 est une vue en coupe d'un composant de la deuxième partie d'un connecteur selon l'invention.
La figure 6 est une vue de face du composant selon la figure 5.
La figure 7 est une vue en coupe d'un autre composant de la deuxième partie d'un connecteur selon l'invention et la figure 8 en est une vue de face.

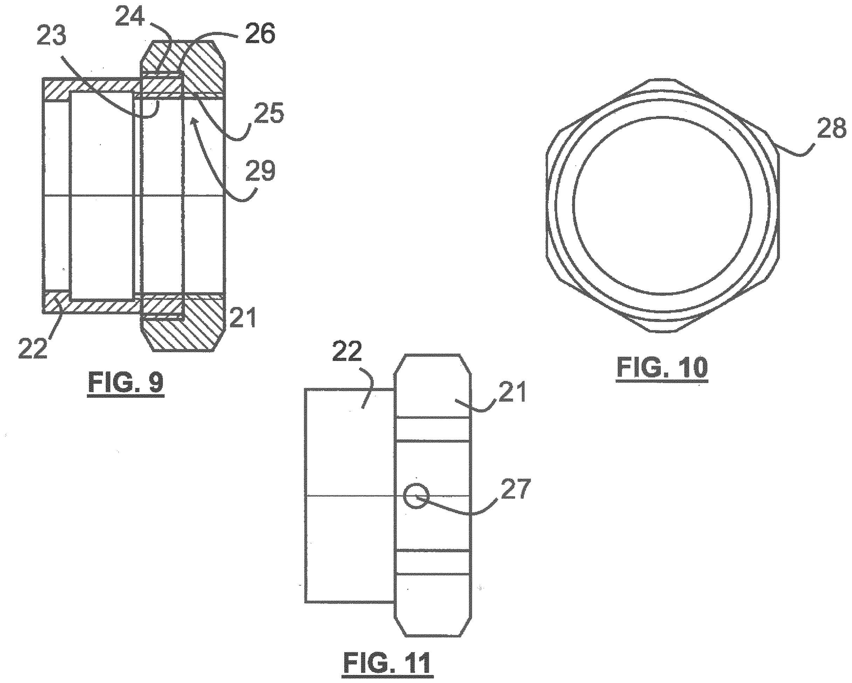

La figure 9 est une vue en coupe des composants des figures 5 à 8 assemblés.
La figure 10 est une vue de face de la figure 8.
La figure 11 est une vue de côté de l'assemblage de la figure 9.

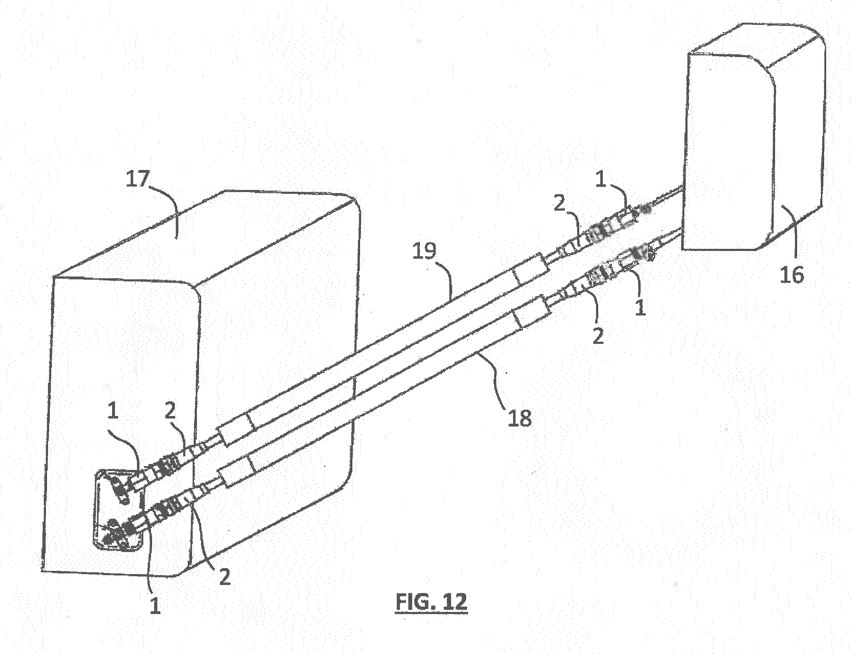

La figure 12 illustre un mode de réalisation d'un appareil de climatisation selon l'invention.

### DESCRIPTION DETAILLEE

Avant d'entrer dans le détail de modes de réalisation de l'invention, notamment au regard des figures, on indique ci-après différentes possibilités que l'invention peut éventuellement présenter individuellement ou selon toutes combinaisons :
- le premier composant 21 est situé à une extrémité distale de l'élément de serrage 12 et le deuxième composant 22 à une extrémité proximale de l'élément de serrage 12 ;
- le deuxième composant 22 comprend une butée 30 configurée pour arrêter en translation l'élément de serrage 12 relativement au reste de la deuxième partie 2 du connecteur ;
- le deuxième composant 22 ne comprend pas de moyens de prise avec un outil de vissage ;
- le deuxième composant 22 a une section transversale circulaire ;
- le profil de serrage 28 du premier composant 21 est polygonal, de préférence hexagonal ;
- le filetage 12a et le taraudage 29 ont un pas de filet opposé au pas de filet de la liaison filetée 24, 26 ;
- le pas de filet de la liaison filetée 24, 26 est à gauche ;
- la longueur de la liaison filetée 24, 26 est inférieure à la longueur de l'autre partie 23 du taraudage 29 ;
- l'élément de serrage 12 est creux ;
- la liaison filetée 24, 26 comprend un filetage 24 porté par le deuxième composant 22 et un taraudage 26 porté par le premier composant 21 ;
- le premier composant 21 comprend un trou débouchant 27 entre sa paroi extérieure et le filetage 26 ;
- la première partie 1 comprend un premier corps longitudinal 3 ménageant un passage traversant recevant une soupape 5 mobile, ledit passage logeant un premier ressort 14 destiné à maintenir la soupape 5 en contact étanche avec le premier corps longitudinal 3 lorsque le connecteur est en position déconnectée, le premier corps longitudinal 3 comprenant une butée interne 11 contre laquelle la soupape 5 est destinée à être en contact par défaut sous l'action du premier ressort 14 au moins lorsque le connecteur est en position déconnectée et la deuxième partie 2 comprenant un deuxième corps longitudinal 4 ménageant un passage traversant ainsi qu'un manchon 9 mobile et un piston 6, le piston 6 étant placé au moins partiellement dans le manchon 9 placé au moins partiellement dans le deuxième corps longitudinal 4 et le piston 6 étant fixe relativement au deuxième corps longitudinal 4, un second ressort 15 étant placé entre la bague de maintien 13 et le manchon 9 dans le deuxième corps longitudinal 4 de sorte à maintenir un contact du manchon 9 contre le premier corps longitudinal 3 lorsque le connecteur est en position connectée.

L'invention concerne un connecteur de raccordement pour les tuyaux de climatisation. On entend par tuyau, une canalisation ou un conduit qui peut être souple ou rigide et destinée à l'écoulement d'un fluide, par exemple un liquide ou un gaz. Ces tuyaux peuvent être des éléments de circulation du fluide en étant raccordés à des unités intérieure et extérieure formant un appareil de climatisation.

Le connecteur selon l'invention comprend une première partie 1 préférentiellement destinée à être reliée à une unité extérieure 16 d'un appareil de climatisation et une deuxième partie 2 pouvant être destinée à être reliée à une unité intérieure 17 d'un appareil de climatisation, mais ceci n'est pas obligatoire.

Une autre forme de réalisation d'un appareil de climatisation avec un autre positionnement des connecteurs sera détaillée ultérieurement en regard de la figure 12.

De manière générale, selon la présente invention, les connecteurs sont positionnés dans un appareil de climatisation.

La première partie 1 et la deuxième partie 2 sont destinées à coopérer de sorte à permettre le raccordement des tuyaux auxquels elles sont fixées.

Lorsque la première partie 1 et la deuxième partie 2 sont connectées, le connecteur est en position connectée. Inversement, lorsque la première partie 1 et la deuxième partie 2 sont déconnectées, le connecteur est en position déconnectée.

On entend par position déconnectée que la première partie 1 et la deuxième partie 2 du connecteur ne sont pas raccordées. Il n'y a pas alors de passage de fluide à travers le connecteur. A l'inverse, on entend par position connectée celle où la première partie 1 et la deuxième partie 2 du connecteur sont raccordées qu'il y ait ou non possibilité de passage du fluide.

On décrit ultérieurement un exemple de mode de solidarisation des 2 parties du connecteur. Auparavant, on donne un exemple de structure interne du connecteur notamment dans ses aspects permettant le raccordement fluidique au travers de celui-ci. On forme ainsi un dispositif d'ouverture du connecteur pour la circulation d'un fluide au travers.

Cet exemple est fourni avec le support des figures 1 à 4 suivant une possibilité actuellement connue que l'invention peut implémenter.

La première partie 1 comprend un premier corps longitudinal 3 ménageant un passage traversant permettant l'écoulement du fluide. Le premier corps longitudinal 3 comprend dans le passage traversant une soupape mobile 5 fermée par défaut. La soupape 5 est munie d'au moins un moyen d'étanchéité 7 assurant l'étanchéité par défaut avec le premier corps longitudinal 3 au moins lorsque le connecteur est en position déconnectée.

Le premier corps longitudinal 3 comprend une butée interne 11 contre laquelle la soupape 5 est destinée à être en contact par défaut.

La soupape 5 est maintenue fermée par défaut au moyen d'un premier élément élastique tel qu'un ressort 14 disposé entre la soupape 5 et préférentiellement le premier corps longitudinal 3. Avantageusement, la butée interne 11 est formée dans le premier corps longitudinal 3 dans sa partie proximale 20, c'est-à-dire à l'extrémité destinée à être raccordée à la deuxième partie 2 du connecteur. De manière similaire, l'extrémité proximale de la deuxième partie 2 est celle destinée à être raccordée à la première partie 1.

Selon cette disposition représentée sur l'ensemble des figures, la soupape 5 comprend une tête sur laquelle sont positionnés des moyens d'étanchéité 7 qui sont en contact par défaut avec la surface distale de la butée interne 11, préférentiellement au moyen du premier ressort 14 disposé au niveau de la tige de la soupape 5. La surface distale de la butée interne 11 est constituée par la surface faisant face à l'extrémité distale de la première partie 1. Le moyen d'étanchéité 7 exerce un appui axial orienté suivant l'axe longitudinal de la soupape 5 sur la butée interne 11.

Ainsi, lorsque la première partie 1 est reliée à l'unité extérieure 16, il n'y a pas de risque d'introduction de gaz ou d'humidité ou de perte de l'effet de vide réalisé au niveau de l'unité extérieure 16.

La deuxième partie 2 du connecteur selon l'invention comprend un deuxième corps longitudinal 4 ménageant un passage traversant permettant l'écoulement du fluide. Dans le passage traversant est placé un manchon mobile 9 et un piston 6. Le manchon 9 est avantageusement placé au moins partiellement dans le deuxième corps longitudinal 4 et reçoit le piston 6 en son intérieur.

Le piston 6 comporte de préférence une tête par laquelle le piston 6 peut accoster la soupape 5 au niveau d'une extrémité distale de la tête. La tête présente de préférence une partie inclinée, telle qu'une partie conique s'évasant vers l'extrémité distale du piston 6 et, vers l'avant, une portion au niveau de laquelle est présente une bordure pouvant former une butée.

Préférentiellement, le piston 6 est muni d'au moins un moyen d'étanchéité 8 assurant l'étanchéité par défaut avec le manchon 9. Préférentiellement, cette étanchéité est réalisée au niveau de l'extrémité proximale de la deuxième partie 2. Ce moyen d'étanchéité 8 est préférentiellement un joint torique agencé sur le piston 6. Ce moyen d'étanchéité 8 est plus précisément placé sur la tête conique du piston 6 de sorte à coopérer avec l'extrémité proximale du manchon 9. Le manchon 9 présente avantageusement au niveau de son extrémité proximale une surface biseautée vers l'intérieur du manchon destiné à coopérer avec la tête conique du piston 6. L'appui du moyen d'étanchéité 8 sur le manchon 9 est un appui mixte comprenant une composante axiale et une composante radiale.

Selon l'invention, le manchon 9 comprend au moins deux joints 10. Au moins un joint 10 est destiné à assurer l'étanchéité par défaut entre le deuxième corps longitudinal 4 et le manchon 9. Au moins un autre joint 10 est quant à lui destiné à assurer l'étanchéité avec le premier corps longitudinal 3 lorsque la première partie 1 et la deuxième partie 2 sont raccordées. Selon une possibilité préférée, les joints 10 sont des joints toriques.

Lorsque la première partie 1 et la deuxième partie 2 sont déconnectées, la deuxième partie 2 est hermétique et ne permet pas la sortie du gaz réfrigérant, par exemple en dehors d'une unité intérieure 17 de l'appareil de climatisation.

Selon un mode préféré de l'invention, le piston 6 et la butée interne 11 sont configurés pour ne pas entrer en contact. Le piston 6 est configuré pour coopérer avec la soupape 5. Selon le mode de réalisation représenté, le piston 6 présente un diamètre inférieur à celui du passage formé par la butée interne 11.

De même, le manchon 9 est configuré pour entrer en contact avec la butée interne 11.

Le piston 6 est monté fixe sur le deuxième corps longitudinal 4 préférentiellement au moyen d'une bague de maintien 13. La tige du piston 6 est montée fixe au niveau de la bague de maintien 13. La bague de maintien 13 est placée au niveau de l'extrémité distale de la deuxième partie 2.

Selon une possibilité, le positionnement du piston 6 peut être contrôlé en fonction du positionnement de la bague de maintien 13.

La bague de maintien 13 constitue une butée pour un second élément élastique tel qu'un ressort 15 destiné à être positionné entre la bague de maintien 13 et le manchon 9 de sorte à maintenir le manchon 9 partiellement en dehors du deuxième corps longitudinal 4.

Le connecteur selon l'invention comprend avantageusement un élément de serrage 12 porté par l'une des première et deuxième parties 1, 2 coopérant avec un moyen complémentaire porté par l'autre de la première ou deuxième parties 1, 2. Le moyen ou élément de serrage 12 et son moyen complémentaire permettent, lors du raccordement de la première partie 1 et de la deuxième partie 2, de les rapprocher et de les maintenir en position. Selon une possibilité préférée, le rapprochement est progressif.

Préférentiellement, tel que représenté sur l'ensemble des figures, le moyen de serrage 12 et son moyen complémentaire sont constitués d'éléments mâle/femelle de filetage. Avantageusement, la première partie 1 présente une extrémité destinée à être en vis-à-vis de la deuxième partie 2 qui comprend un filetage extérieur 12a, ce filetage extérieur 12a illustrant le moyen complémentaire. La deuxième partie 2 comprend un moyen de serrage avantageusement sous la forme d'une bague de maintien 12 pouvant se visser sur le filetage extérieur 12a présent à l'extrémité de la première partie 1.

Plus précisément, les figures 5 à 11 procurent un exemple de réalisation de l'élément de serrage 12 dans un mode préférentiel de réalisation de l'invention. Dans ce cadre, l'élément de serrage 12 comporte de préférence deux parties assemblables, respectivement dénommées premier composant 21 et deuxième composant 22.

Une illustration du deuxième composant 22 est donnée aux figures 5 et 6 respectivement en coupe et de face. En figure 5, le composant 22 comportent un corps creux avantageusement de section circulaire formant une portion de cylindre s'étendant suivant la direction longitudinale du connecteur. Le deuxième composant 22 peut former une partie proximale de la deuxième partie du connecteur c'est-à-dire que le deuxième composant 22 est situé plus vers l'intérieur de la deuxième partie que vers son extrémité destinée à être assemblée avec la première partie. À son extrémité proximale, le composant 22 peut comprendre une butée 30 faisant saillie radialement vers l'intérieur du corps creux de sorte à coopérer avec un moyen de butée complémentaire réalisé sur le reste de la deuxième partie du connecteur. De cette façon, l'élément de serrage 12 peut être monté en rotation mais est retenu en translation relativement au reste du deuxième connecteur 2. A l'autre extrémité du composant 22, la cavité intérieure de celui-ci comporte avantageusement une portion taraudée 23 formant en partie le taraudage 29 de l'élément de serrage 12 apte à coopérer avec le filetage 12a.

Sur sa paroi extérieure, le composant 22 présente de préférence un filetage 24 permettant sa coopération avec le premier composant 21.

De préférence, la paroi extérieure du composant 22 restant apparente après solidarisation avec le composant 21 est lisse et/ou ne comporte aucun élément (relief, profil polygonal, moyen de prise) susceptible d'être mis en coopération avec un outil exerçant un couple sur le composant 22. De préférence, hormis la partie du filetage 24, la paroi extérieure du composant 22 et de section circulaire lisse.

Le premier composant 21 est illustré aux figures 7 et 8 avec la forme générale d'un écrou comprenant un profil de serrage 28 sur sa paroi extérieure. Le premier composant 21 présente une cavité dans la continuité de la cavité du deuxième composant 22. Suivant la direction longitudinale du connecteur, un premier tronçon de la cavité du deuxième composant comporte un taraudage 26 apte à coopérer avec le filetage 24 de sorte à assembler le premier composant 21 sur le deuxième composant 22. Un autre tronçon de la cavité du premier composant 21 comporte un taraudage 25 formant une autre partie du taraudage 29 permettant la solidarisation par filetage avec le filetage 12a.

On comprend de ce qui précède que le profil de serrage 28 est de préférence une zone d'exercice d'un couple de serrage et de desserrage qui est unique sur l'ensemble de l'élément de serrage 12.

Les figures 9 à 11 donnent une illustration d'un assemblage des composants 21 et 22. À la figure 9, on note l'assemblage par filetage opéré entre ces deux composants de sorte à produire un élément solidaire constitutif de l'élément de serrage 12. En outre, on note que les portions taraudées 23, 25 sont en continuité de sorte à produire le taraudage 29 amené à coopérer avec le filetage 12a. Selon l'invention, la liaison filetée 24, 26 est configurée de sorte à ce que le sens de vissage des deux composants de cette liaison corresponde au sens de vissage entre le taraudage 29 et le filetage 12a. De cette façon, lorsque l'opérateur produit un couple de serrage au niveau du profil de serrage 28 du composant 21, ce dernier a tendance à conforter la solidarisation entre les deux composants 21, 22 et à produire un vissage de l'élément de serrage 12 sur le filetage 12a. À l'inverse, si un opérateur exerce un couple de desserrage au niveau du profil de serrage 28, ce couple produira en premier lieu un dévissage des portions 24, 28 et non un dévissage de la liaison entre le taraudage 29 et le filetage 12a. On dispose ainsi d'un élément de sécurité évitant la déconnexion des deux parties du connecteur par un utilisateur non approprié.

La liaison 24, 26 peut être à filet à gauche et la liaison 29, 12a à filet à droite.

De préférence, la longueur de la liaison 24, 26 est inférieure à celle entre l'élément de serrage et le filetage 12a. Toujours de manière préférentielle, la longueur du taraudage 23 est supérieure à la longueur du filetage 24 du composant 22. De cette manière, la résistance au desserrage est plus grande entre le taraudage 29 et le filetage 12a qu'entre les parties 24 26.

Selon l'invention, les parties 1 et 2 peuvent être rapprochées l'une de l'autre pour placer le connecteur en position connectée mais un dispositif permet d'interdire un retrait de la deuxième partie 2 relativement à la première partie 1 une fois la position connectée atteinte.

En effet, le desserrage n'est pas permis car la rotation dans le sens du desserrage du premier composant 21 entraînera uniquement la désolidarisation de celui-ci relativement au deuxième composant 22.

Il est cependant avantageux d'autoriser le démontage du connecteur par une personne autorisée et notamment un opérateur muni d'un outil spécifique. À cet effet, l'élément de serrage 12 peut comporter, au niveau du premier composant 21, un trou 27 illustré en figure 11 et présentant une embouchure au niveau de la paroi extérieure du composant 21. L'autre extrémité du trou 27 débouche au niveau du taraudage 25. Le trou 27 permet le passage d'un outil de sorte à contrarier le dévissage de la liaison filetée 24, 26. Ainsi, lorsque l'outil est inséré dans le trou 27, le couple de desserrage est transmis entre le taraudage 29 et le filetage 12a.

Le procédé de montage des première et deuxième parties 1, 2 comprend par exemple les étapes suivantes.

Les moyens de vissage 12, 12a respectifs des première et deuxième parties 1, 2 sont mis en coopération et vissés progressivement, ce qui débute par exemple pour une longueur de filetage, restante et non en prise, égale à 12,4 mm ou 12,3 mm pour un filetage de longueur totale de 14 mm. Avantageusement, au cours du vissage, le filetage 12a traverse l'élément de serrage 12 sur la totalité de la partie de taraudage 29. Au-delà d'une certaine profondeur de vissage, le manchon 9 vient en contact avec la butée interne 11. Préférentiellement, le manchon 9 entre en contact par son extrémité proximale avec la surface proximale de la butée interne 11. A ce stade, bien que la première partie 1 et la deuxième partie 2 du connecteur soient raccordées, la profondeur de vissage du moyen de serrage 12 n'est pas suffisante et, de ce fait, la soupape 5 et le piston 6 sont toujours fermés par défaut. De plus, à cette étape, le manchon 9 est par au moins l'un de ses joints 10 apte à réaliser l'étanchéité avec la première partie 1.

Ainsi, le flux de fluide ne circule pas encore entre la première partie 1 et la deuxième partie 2 du connecteur. L'étanchéité entre la première partie 1 et la deuxième partie 2 est d'ores et déjà réalisée par le manchon 9.

La poursuite du vissage produit une avancée du piston 6 relativement au manchon 9 jusqu'à ce que le piston 6 vienne en appui sur la soupape 5. Le piston 6 génère un mouvement de recul de la soupape 5 en direction de l'extrémité distale de la première partie 1 supprimant ainsi l'étanchéité entre la soupape 5 et la butée interne 11. De même, ce mouvement éloigne le piston 6 et le manchon 9 et supprime l'étanchéité entre le piston 6 et le manchon 9. Il y a donc circulation du fluide entre la première partie 1 et la deuxième partie 2 tout en ayant une étanchéité parfaite entre la première partie 1 et la deuxième partie 2 grâce au manchon 9 et à ses joints 10. Lors de cette étape, le manchon 9 et la soupape 5 ont un déplacement en sens opposé.

La disposition de la présente invention permet, lors du vissage du moyen de serrage 12, de maintenir constamment l'étanchéité entre la première partie 1 et la deuxième partie 2 du fait du déplacement simultané du manchon 9, élément constituant de la deuxième partie 2 et de la première partie 1. En effet, l'appui entre la butée interne 11 et le manchon 9 est constant et perpétuel lors du vissage du moyen de serrage 12 avec son moyen complémentaire 12a.

Un appareil de climatisation selon l'invention comprend par exemple au moins une unité extérieure 16 destinée à être positionnée à l'extérieur du volume à climatiser. Généralement, l'unité extérieure 16 comporte des moyens de convexion forcée disposant d'un ventilateur ainsi qu'un circuit, dit circuit extérieur, dans lequel circule un fluide réfrigérant. En sortie et en entrée du circuit extérieur, des connecteurs sont généralement disposés de sorte à assurer la fermeture du circuit lors des phases de montage et de démontage.

L'appareil comprend, d'autre part, une unité intérieure 17, par exemple constituée d'un bloc mural apte à souffler de l'air à température sélectionnée dans le volume à climatiser. A cet effet, l'unité intérieure 17 comporte un circuit intérieur, pour la circulation du fluide réfrigérant. Les circuits intérieur et extérieur respectivement de l'unité intérieure 17 et de l'unité extérieure 16, en présentant chacun une entrée et une sortie de circuit, sont raccordés respectivement par un des tuyaux 18, 19 de raccordement illustrés également en figure 12.

A la figure 12, les extrémités des tuyaux de raccordement 18, 19 sont solidarisées avec la deuxième partie 2 d'un connecteur respectif selon l'invention. La première partie 1 du connecteur selon l'invention est alors montée respectivement sur l'unité extérieure 16 et l'unité intérieure 17. Ceci n'est pas forcément le cas dans tous les modes de réalisation de l'invention.

Dans une forme préférentielle d'appareil de climatisation, deux tuyaux de raccordement 18, 19 relient respectivement l'entrée du circuit extérieur de l'unité extérieure 16 à la sortie du circuit intérieur de l'unité intérieure 17 ou la sortie du circuit extérieur de l'unité extérieure 16 à l'entrée du circuit intérieur de l'unité intérieure 17, un connecteur étant prévu à chaque extrémité de chaque tuyau 18, 19.

Préférentiellement, chaque connecteur présente un de ses corps longitudinaux respectifs pour les première et deuxième parties 1, 2 comportant le ressort avec la raideur la moins élevée disposé du côté de l'unité intérieure 17 ou extérieure 16 tandis que l'autre corps longitudinal de la première ou deuxième partie 1, 2 comportant le ressort avec la raideur la plus élevée est disposé du côté du tuyau de raccordement 18, 19.

Le connecteur selon l'invention permet d'éviter toute manipulation du fluide réfrigérant sur des machines préchargées en fluide (le fluide est contenu dans le compresseur de l'unité extérieure 16) et évite une mise en service qui consiste en l'extraction du fluide, le tirage au vide et la réintroduction du fluide. On interdit par conséquent tout risque de dégazage ou de fuite lié à de mauvaises manipulations ou à un défaut de matériel.

En outre, une fois le connecteur activé, il n'est plus possible de le déconnecter à moins, éventuellement, d'une intervention par un expert doté d'un outil spécifique si bien que l'on garantit qu'aucune manipulation ultérieure à l'installation n'est susceptible de produire des fuites de gaz.

### REFERENCES

- 1.: Première partie
- 2.: Deuxième partie
- 3.: Premier corps longitudinal
- 4.: Deuxième corps longitudinal
- 5.: Soupape
- 6.: Piston
- 7.: Moyen d'étanchéité de la soupape
- 8.: Moyen d'étanchéité du piston
- 9.: Manchon
- 10.: Joints
- 11.: Butée interne
- 12.: Moyen de serrage
- 12a.: Filetage
- 13.: Bague de maintien
- 14.: Premier ressort
- 15.: Second ressort
- 16.: Unité extérieure
- 17.: Unité intérieure
- 18.: Tuyau
- 19.: Tuyau
- 20.: Partie proximale
- 21.: Premier composant
- 22.: Deuxième composant
- 23.: Taraudage
- 24.: Filetage
- 25.: Taraudage
- 26.: Taraudage
- 27.: Trou débouchant
- 28.: Profil de serrage
- 29.: Liaison filetée
- 30.: Butée

## Revendications

1. Connecteur de tuyau de circuit de climatisation comprenant une première partie (1) dotée d'un filetage (12a) et une deuxième partie (2) dotée d'un taraudage (29), le filetage (12a) et le taraudage (29) étant destinées à coopérer par vissage selon un premier sens de rotation de sorte que le connecteur opère un passage d'une position déconnectée à une position connectée, le connecteur comprenant un dispositif d'ouverture, formé pour partie dans la première partie (1) et pour partie dans la deuxième partie (2), et configuré pour permettre une circulation fluidique entre la première partie (1) et la deuxième partie (2) lorsque le connecteur est dans la position connectée et pour interdire une circulation fluidique entre la première partie (1) et la deuxième partie (2) lorsque le connecteur est dans la position déconnectée, ledit connecteur étant **caractérisé par le fait que** le taraudage (29) est formé pour une partie (25) dans un premier composant (21) d'un élément de serrage (12) de la deuxième partie (2) et pour une autre partie (23) dans un deuxième composant (22) d'un élément de serrage (12) de la deuxième partie (2), le premier composant (21) comprenant un profil de serrage (28) apte à coopérer avec un outil de serrage, le premier composant (21) et le deuxième composant (22) coopérant par une liaison filetée (24, 26) configurée pour être vissée selon le premier sens de rotation et dévissée selon un deuxième sens de rotation opposé au premier sens de rotation.

2. Connecteur selon la revendication précédente, dans lequel le premier composant (21) est situé à une extrémité distale de l'élément de serrage (12) et le deuxième composant (22) à une extrémité proximale de l'élément de serrage(12).

3. Connecteur selon la revendication précédente, dans lequel le deuxième composant (22) comprend une butée (30) configurée pour arrêter en translation l'élément de serrage (12) relativement au reste de la deuxième partie (2) du connecteur.

4. Connecteur selon l'une quelconque des revendications précédentes, dans lequel le deuxième composant (22) ne comprend pas de moyens de prise avec un outil de vissage.

5. Connecteur selon l'une quelconque des revendications précédentes, dans lequel le deuxième composant (22) a une section transversale circulaire.

6. Connecteur selon l'une quelconque des revendications précédentes, dans lequel le profil de serrage (28) du premier composant (21) est polygonal, de préférence hexagonal.

7. Connecteur selon l'une des revendications précédentes, dans lequel le pas de filet de la liaison filetée (24, 26) est à gauche.

8. Connecteur selon l'une quelconque des revendications précédentes, dans lequel la longueur de la liaison filetée (24, 26) est inférieure à la longueur de l'autre partie (23) du taraudage (29).

9. Connecteur selon l'une quelconque des revendications précédentes, dans lequel l'élément de serrage (12) est creux.

10. Connecteur selon l'une quelconque des revendications précédentes, dans lequel la liaison filetée (24, 26) comprend un filetage (24) porté par le deuxième composant (22) et un taraudage (26) porté par le premier composant (21).

11. Connecteur selon la revendication précédente, dans lequel le premier composant (21) comprend un trou débouchant (27) entre sa paroi extérieure et le filetage (26).

12. Connecteur selon l'une quelconque des revendications précédentes, dans lequel la première partie (1) comprend un premier corps longitudinal (3) ménageant un passage traversant recevant une soupape (5) mobile, ledit passage logeant un premier ressort (14) destiné à maintenir la soupape (5) en contact étanche avec le premier corps longitudinal (3) lorsque le connecteur est en position déconnectée, le premier corps longitudinal (3) comprenant une butée interne (11) contre laquelle la soupape (5) est destinée à être en contact par défaut sous l'action du premier ressort (14) au moins lorsque le connecteur est en position déconnectée et la deuxième partie (2) comprenant un deuxième corps longitudinal (4) ménageant un passage traversant ainsi qu'un manchon (9) mobile et un piston (6), le piston (6) étant placé au moins partiellement dans le manchon (9) placé au moins partiellement dans le deuxième corps longitudinal (4) et le piston (6) étant fixe relativement au deuxième corps longitudinal (4), un second ressort (15) étant placé entre la bague de maintien (13) et le manchon (9) dans le deuxième corps longitudinal (4) de sorte à maintenir un contact du manchon (9) contre le premier corps longitudinal (3) lorsque le connecteur est en position connectée.

13. Appareil de climatisation comportant une unité extérieure (16) et au moins une unité intérieure (17), au moins l'une des unités extérieure (16) et intérieure (17) comprenant un circuit empli d'un fluide réfrigérant, les deux circuits étant reliés par au moins un connecteur selon l'une quelconque des revendications précédentes.

## Patentansprüche

1. Anschlussstück für Verbindungsrohre eines Klimatisierungskreislaufs, umfassend einen ersten Teil (1), der mit einem Gewinde (12a) versehen ist, und einen zweiten Teil (2), der mit einer Gewindebohrung (29) versehen ist, wobei das Gewinde (12a) und die Gewindebohrung (29) durch Verschrauben in einer ersten Drehrichtung zusammenwirken, so dass das Anschlussstück von einer getrennten Position zu einer verbundenen Position übergeht, wobei das Anschlussstück eine Öffnungsvorrichtung umfasst, das teilweise im ersten Teil (1) und teilweise im zweiten Teil (2) ausgebildet ist und das so ausgerichtet ist, um einen Flüssigkeitsstrom zwischen dem ersten Teil (1) und dem zweiten Teil (2) zu ermöglichen, wenn sich das Anschlussstück in der verbundenen Position befindet, und um einen Flüssigkeitsstrom zwischen dem ersten Teil (1) und dem zweiten Teil (2) zu unterbrechen, wenn sich das Anschlussstück in der getrennten Position befindet, wobei das Anschlussstück **dadurch gekennzeichnet ist, dass** die Gewindebohrung (29) in einem Teil (25) einer ersten Komponente (21) eines Klemmelements (12) des zweiten Teils (2) und in einem anderen Teil (23) in einer zweiten Komponente (22) eines Klemmelements (12) des zweiten Teils (2) ausgebildet ist, wobei die erste Komponente (21) ein Klemmprofil (28) umfasst, das geeignet ist, mit einem Spannwerkzeug zusammenzuwirken, wobei die erste Komponente (21) und die zweite Komponente (22) über eine Gewindeverbindung (24, 26) zusammenwirken, die so ausgerichtet ist, um in der ersten Drehrichtung aufgeschraubt und in einer zweiten Drehrichtung entgegen der ersten Drehrichtung abgeschraubt zu werden.

2. Anschlussstück nach dem vorstehenden Anspruch, wobei die erste Komponente (21) an einem distalen Ende des Klemmelements (12) und die zweite Komponente (22) an einem proximalen Ende des Klemmelements (12) angeordnet ist.

3. Anschlussstück nach dem vorhergehenden Anspruch, wobei die zweite Komponente (22) einen Anschlag (30) umfasst, der konfiguriert ist, um die seitliche Verschiebung des Klemmelements (12) in Bezug auf den Rest des zweiten Teils (2) des Anschlussstücks zu stoppen.

4. Anschlussstück nach einem der obigen Ansprüche, wobei die zweite Komponente (22) keine Mittel zum Eingriff mit einem Schraubwerkzeug beinhaltet.

5. Anschlussstück nach einem der vorstehenden Ansprüche, wobei die zweite Komponente (22) einen kreisförmigen Querschnitt aufweist.

6. Anschlussstück nach einem der obigen Ansprüche, wobei das Klemmprofil (28) der ersten Komponente (21) polygonal, vorzugsweise hexagonal ist.

7. Anschlussstück nach einem der obigen Ansprüche, wobei die Gewindesteigung der Gewindeverbindung (24, 26) nach links geht.

8. Anschlussstück nach einem der obigen Ansprüche, wobei die Länge der Gewindeverbindung (24, 26) kleiner ist als die Länge des anderen Teils (23) des Gewindes (29).

9. Anschlussstück nach einem der obigen Ansprüche, wobei das Klemmelement (12) hohl ist.

10. Anschlussstück nach einem der obigen Ansprüche, wobei die Gewindeverbindung (24, 26) ein von der zweiten Komponente (22) getragenes Gewinde (24) und ein von der ersten Komponente (21) getragene Gewindebohrung (26) umfasst.

11. Anschlussstück nach dem obigen Anspruch, wobei die erste Komponente (21) ein Durchgangsloch (27) zwischen ihrer Außenwand und dem Gewinde (26) umfasst.

12. Anschlussstück nach einem der vorstehenden Ansprüche, wobei der erste Teil (1) einen ersten Längskörper (3) umfasst, der einen Durchgangskanal bereitstellt, der ein bewegliches Ventil (5) aufnimmt, wobei der Durchgang eine erste Feder (14) zum Halten des Ventils (5) in abgedichtetem Kontakt mit dem ersten Längskörper (3) beinhaltet, wenn sich das Anschlussstück in der getrennten Position befindet, wobei der erste Längskörper (3) einen inneren Anschlag (11) aufweist, gegen den das Ventil (5) unter Einwirkung der ersten Feder (14) zumindest standardmäßig Kontakt stehen soll, wenn sich das Anschlussstück in Trennstellung befindet, und der zweite Teil (2) einen zweiten Längskörper (4) aufweist, der einen Durchgangskanal sowie eine bewegliche Hülse (9) und einen Kolben (6) bereitstellt, wobei der Kolben (6) zumindest teilweise in der Hülse (9) angeordnet ist, die zumindest teilweise in dem zweiten Längskörper (4) angeordnet ist, und wobei der Kolben (6) in Bezug auf den zweiten Längskörper (4) befestigt ist, wobei eine zweite Feder (15) zwischen dem Haltering (13) und der Hülse (9) in dem zweiten Längskörper (4) angeordnet ist, um einen Kontakt der Hülse (9) mit dem ersten Längskörper (3) aufrechtzuerhalten, wenn sich das Anschlussstück in der verbundenen Position befindet.

13. Klimaanlagengerät mit einer Außeneinheit (16) und mindestens einer Inneneinheit (17), wobei mindestens eine der Außen- (16) und Inneneinheiten (17) einen mit einem Kältemittel gefüllten Kreislauf umfasst, wobei die beiden Kreisläufe durch mindestens ein Anschlussstück nach einem der vorstehenden Ansprüche verbunden sind.

## Claims

1. A connector for connecting pipes of an air-conditioning circuit comprising a first part (1) provided with a thread (12a) and a second part (2) provided with a tap (29), the thread (12a) and the tap (29) being intended to cooperate by screwing in a first direction of rotation so that the connector changes from a disconnected position to a connected position, the connector comprising an opening device, formed partly in the first part (1) and partly in the second part (2), and configured to allow fluid flow between the first part (1) and the second part (2) when the connector is in the connected position and to prevent fluid flow between the first part (1) and the second part (2) when the connector is in the disconnected position, the said connector being **characterized by** the fact that the tap (29) is formed partly (25) in a first component (21) of a clamping element (12) of the second part (2) and for another part (23) in a second component (22) of a clamping device (12) of the second part (2), while the first component (21) comprising a clamping profile (28) is adapted to cooperate with a clamping tool, the first component (21) and the second component (22) cooperating through a threaded connection (24, 26) is configured to be screwed in the first direction of rotation and unscrewed in a second direction of rotation opposite to the first direction of rotation.

2. A connector according to the preceding claim, wherein the first component (21) is located at a distal end of the clamping element (12) and the second component (22) has an end near the clamping element (12).

3. A connector according to the preceding claim, wherein the second component (22) comprises a stop (30) configured to stop in translation the clamping element (12) relative to the remainder of the second part (2) of the connector.

4. A connector according to any of the preceding claims, wherein the second component (22) does not include means of engagement with a screwing tool.

5. A connector according to any of the preceding claims, wherein the second component (22) has a circular cross-section.

6. A connector according to any of the preceding claims, wherein the clamping profile (28) of the first component (21) is polygonal, preferably hexagonal.

7. A connector according to one of the preceding claims, wherein the thread pitch of the threaded connection (24, 26) is to the left.

8. A connector according to any of the preceding claims, wherein the length of the threaded connection (24, 26) is less than the length of the other part (23) of the tap (29).

9. A connector according to any of the preceding claims, wherein the clamping element (12) is hollow.

10. A connector according to any of the preceding claims, wherein the threaded connection (24, 26) comprises a thread (24) supported by the second component (22) and a tap (26) supported by the first component (21).

11. A connector according to the preceding claim, wherein the first component (21) comprises a through hole (27) between its outer wall and the thread (26).

12. A connector according to any of the above claims, wherein the first part (1) comprises a first longitudinal body (3) providing a through passage receiving a moving valve (5), said passage housing a first spring (14) for keeping the valve (5) in sealed contact with the first longitudinal body (3) when the connector is in the disconnected position, the first longitudinal body (3) comprising an internal stop (11) against which the valve (5) is intended by default to be in contact under the action of the first spring (14) at least when the connector is in the disconnected position and the second part (2) comprising a second longitudinal body (4) leading to a through passage and a moving sleeve (9) and a piston (6), the piston (6) being placed at least partially in the sleeve (9) placed at least partially in the second longitudinal body (4) and the piston (6) being fixed relative to the second longitudinal body (4), a second spring (15) being placed between the retaining ring (13) and the sleeve (9) in the second longitudinal body (4) so as to maintain a contact of the sleeve (9) against the first longitudinal body (3) when the connector is in the connected position.

13. Air-conditioning device comprising an outer unit (16) and at least one inner unit (17), at least one of the outer (16) and inner (17) units comprising a circuit filled with a refrigerant, the two circuits being connected by at least one connector according to any of the preceding claims.
